# EUROPEAN PATENT APPLICATION

(11) **EP 3 232 392 A1**
(43) Date of publication of application: **18.10.2017**
(21) Application number: 15869949.6
(22) Date of filing: 14.12.2015
(51) Int. Cl.: G06Q 30/06, G06Q 30/02

(54) **ORDERING SYSTEM UTILIZING PERSONAL INFORMATION**

(30) Priority: 14.12.2014 JP 2014252551
(71) Applicant: Kagiwada, Yoshimitsu, Ashigarakami-gun Kanagawa 258-0002 (JP); Keysoft Inc., Ashigarakami-gun Kanagawa 258-0002 (JP)
(72) Inventor: Kagiwada, Yoshimitsu, Kanagawa, 2580002 (JP)
(74) Representative: Leinweber & Zimmermann
(86) International application number: PCT/JP2015/084984
(87) International publication number: WO 2016/098744

(57) **Abstract**

[Object]

Even in a case of ordering an item on a site used for the first time, the necessity to input personal information such as a name and an address is eliminated and thus such troublesome work of input is reduced.

[Solving Means]

Included are: a personal information storage (40) that stores personal information registered in one site while associating the personal information with a personal identifier, and provides the personal information to another site; an order I/F device (10) that transmits order form information of an item at least including an personal identifier and an item identifier; an order processing device (20) that receives the order form information of the item, acquires the personal information associated with the personal identifier included in the order form information, generates order specification information based on the acquired personal information and the order form information of the item, and transmits the order specification information; and an order specification reception device that receives the order specification information and causes an output device to output the order specification information so as to prepare to deliver the item.

## Description

### TECHNICAL FIELD

The invention relates to an ordering system utilizing personal information, which uses personal information previously registered in one site to order an item on another site.

### BACKGROUND ART

In a case of ordering an item via online mail-order, an orderer performs operations such as searching for the item on an EC mall or an EC site, and clicking to select the target item from the search results. Patent Literature 1 is a prior art that enables simple ordering without needing to perform those operations, for example.

In the prior art disclosed in this Patent Literature 1, once a picture of product information on a catalog page is taken, a product ID of the product is recognized from the taken picture.

However, in a case of ordering an item via online mail-order used for the first time, at least information such as the address, the name and so on of the orderer or a delivery destination needs to be inputted via keyboard, which requires troublesome work of input.

### CITATION LIST

### PATENT LITERATURE

Patent Literature 1: Japanese Patent Application Publication No. 2014-56504

### SUMMARY OF INVENTION

### TECHNICAL PROBLEMS

An object of the invention is to, even in a case of ordering an item on a site used for the first time, reduce troublesome work of input by eliminating the necessity to input personal information such as an address and a name. In the application, "personal information" is information such as an address and a name that allows a specific person to be identified.

### SOLUTION TO PROBLEMS

The invention adopts the following configuration for achieving the above object. That is, an ordering system utilizing personal information includes:
a personal information storage that stores personal information registered in one site while associating the personal information with a personal identifier, and provides the personal information to another site;
an order I/F device that transmits order form information of an item at least including the personal identifier and an item identifier;
an order processing device that serves as the other site, receives the order form information of the item, acquires the personal information registered in the one site and associated with the personal identifier included in the order form information, generates order specification information based on the acquired personal information and the order form information of the item, and transmits the order specification information; and
an order specification reception device that receives the order specification information and allows an output device to output the order specification information so as to prepare to deliver the item.

In the invention, "item" includes not only a product but also a service.

### ADVANTAGEOUS EFFECTS OF INVENTION

According to the invention, even in a case of ordering an item on a site used for the first time, troublesome work of input is reduced by eliminating the necessity to input personal information such as an address and a name.

### BRIEF DESCRIPTION OF DRAWINGS

[Fig. 1] A configuration diagram illustrating an embodiment of the invention.
[Fig. 2] A structure diagram of data stored in a personal information storage illustrated in Fig. 1.
[Fig. 3] A structure diagram of data stored in an item information storage illustrated in Fig. 1.
[Fig. 4] A configuration diagram illustrating another embodiment of the invention.
[Fig. 5] A structure diagram of data stored in a personal information storage illustrated in Fig. 4.
[Fig. 6] A structure diagram of data stored in an item information storage illustrated in Fig. 4.

### DESCRIPTION OF EMBODIMENTS

### (1)[First Embodiment] Usage of Code or Mark

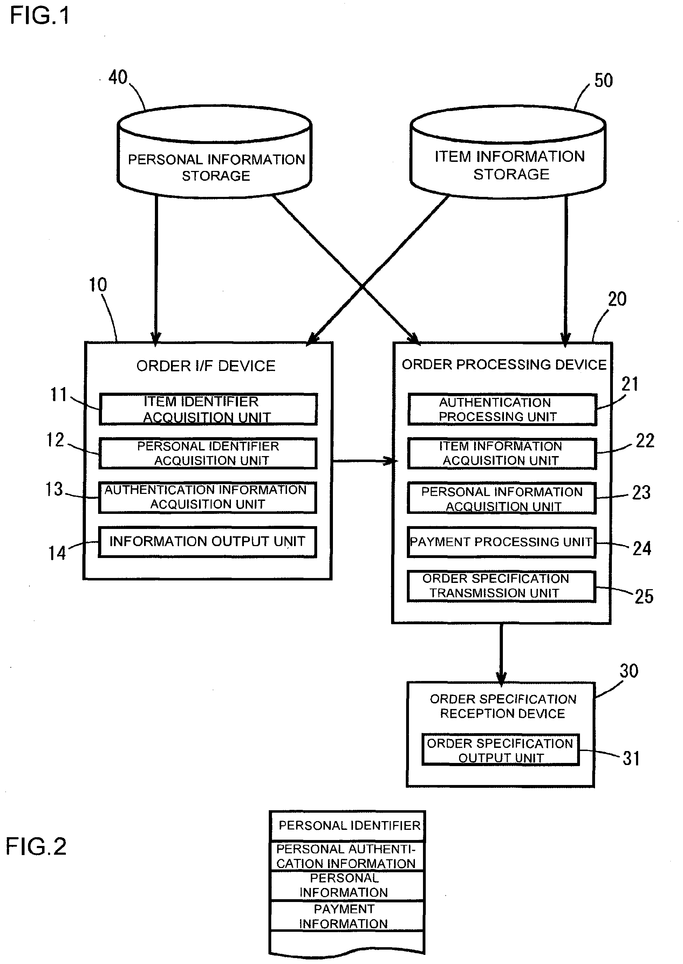

A first embodiment of the invention is described below. Fig. 1 is a block configuration diagram of an ordering system utilizing personal information that is an embodiment of the invention. The system comprises order interface device (order I/F device) 10, order processing device 20, order specification reception device 30, personal information storage 40, and item information storage 50. There are one order I/F device 10 and one order processing device 20 illustrated with respect to one personal information storage 40; however, there may be multiple order I/F devices 10 and order processing devices 20 that use personal information storage 40, indeed. Also, there is only one order I/F device 10 with respect to order processing device 20; however, there may be multiple order I/F devices 10 that use order processing device 20.

### (1-1) Order I/F Device 10

Order I/F device 10 comprises item identifier acquisition unit 11, personal identifier acquisition unit 12, authentication information acquisition unit 13, and information output unit 14. A processor implements these units 11 to 14 by executing a program. The information which units 11 to 14 use for processing is read from a storage area. The information processed by units 11 to 14 is stored into the storage area. The storage area is provided in a storage device. The storage device may be either a main storage device or an auxiliary storage device. Order I/F device 10 receives information from an external device via a communication device. Order I/F device 10 transmits information to the external device via the communication device.

### (1-1-1) Item Identifier Acquisition Unit 11

Item identifier acquisition unit 11 captures an image of a marker or a code, which is provided visibly or invisibly on a medium, with an image capture device (camera) and acquires an item identifier and a channel identifier based on the captured image of the marker or the code. The item identifier is an identifier that allows unique identification of the item information stored in item information storage 50. The channel identifier is an identifier that allows unique identification of a medium operator of the medium on which the marker or the code is provided. The medium on which the marker or the code is provided is, for example, a book, a calendar, a vending machine, clothing, a product poster put on a wall of a station, a screen of a gas pump, a flyer, an advertisement, a newspaper, a publication, a digital signage, a television, a car navigation system, and the like. The code is a two-dimensional barcode, for example. The marker is a marker having the same spec with that for a vision based AR (Augmented Reality). The image capture device is equipped in order I/F device 10.

### (1-1-2) Personal Identifier Acquisition Unit 12

Personal identifier acquisition unit 12 acquires a personal identifier, which is for unique specification of the personal information and the like stored in personal information storage 40, by reading it from a storage area of order I/F device 10. It is enough for the personal identifier to be an identifier that allows unique identification of the personal information and the like stored in personal information storage 40; for example, the personal identifier may be an identifier that is unique to order I/F device 10. For example, when order I/F device 10 is a mobile terminal, information such as the terminal number unique to the mobile terminal can be adopted as the personal identifier. In addition, the unique number and the like, which is stored in an IC card (IC chip) such as a SIM card inserted in the mobile terminal, can be adopted as the personal identifier.

### (1-1-3) Authentication Information Acquisition Unit 13

Authentication information acquisition unit 13 acquires authentication information for identifying a user of order I/F device 10. There may be various ways for acquiring the authentication information: for example, acquiring a password which the user inputs from an input device; acquiring voiceprint information of the user based on a voice inputted from a microphone; acquiring fingerprint information of the user via a fingerprint sensor; and acquiring face identification information and iris identification information of the user based on an image inputted from the image capture device. The input device, the microphone, the fingerprint sensor or the image capture device is equipped in order I/F device 10.

### (1-1-4) Information Output Unit 14

When the user of order I/F device 10 executes an action of indicating ordering of an item, information output unit 14 transmits order form information to order processing device 20, the order form information being associated with the item identifier and the channel identifier acquired by item identifier acquisition unit 11, the personal identifier acquired by the personal identifier acquisition unit, and the authentication information acquired by the authentication information acquisition unit.

### (1-2) Order Processing Device 20

Via a computer network such as the Internet, order processing device 20 receives the order form information transmitted from order I/F device 10. Order processing device 20 comprises authentication processing unit 21, item information acquisition unit 22, personal information acquisition unit 23, payment processing unit 24, and order specification transmission unit 25. The processor implements these units 21 to 25 by executing a program. The information which units 21 to 25 use for processing is read from the storage area. The information processed by units 11 to 14 is stored into a storage area. The storage area is provided in a storage device. The storage device may be either a main storage device or an auxiliary storage device. Order processing device 20 receives information from the external device via the communication device. Order processing device 20 transmits information to the external device via the communication device.

### (1-2-1) Authentication Processing Unit 21

Authentication processing unit 21 acquires the personal identifier included in the order form information, and acquires authentication information associated with this personal identifier from personal information storage 40. Authentication Processing Unit 21 acquires authentication information included in the order form information, and determines whether this authentication information matches the authentication information acquired from personal information storage 40.

### (1-2-2) Item Information Acquisition Unit 22

The item information acquisition unit acquires the item identifier included in the order form information, and acquires the item information associated with this item identifier from item information storage 50. The item information to be acquired at least includes identification information of the item, price information of the item, and contact information of the shipper of the item (address information for communication such as an IP address and an E-mail address set in order specification reception device 30).

### (1-2-3) Personal Information Acquisition unit 23

When the two pieces of authentication information match in authentication processing unit 21 and thus the identification is made, personal information acquisition unit 23 acquires the personal identifier included in the order form information, and acquires the personal information associated with this personal identifier from personal information storage 40. The personal information to be acquired at least includes information, that is, an address, a name, and a contact of the delivery destination of the item.

### (1-2-4) Payment Processing unit 24

When the two pieces of authentication information match in authentication processing unit 21 and thus the identification is made, payment processing unit 24 acquires the personal identifier included in the order form information, and acquires payment information associated with this personal identifier from the personal information storage 40. Payment processing unit 24 then executes predetermined payment processing, for either advance payment or future payment, based on the payment information and the item information which the item information acquisition unit acquires.

At that time, payment processing unit 24 may read multiple pieces of payment information such as credit card information from personal information storage 40, and may transmit an interface for selecting one of the read payment information to order I/F device 10. The user of order I/F device 10 may be authenticated before the transmission. Order I/F device 10 displays the interface for selecting one of the payment information received from order processing device 20 to the user of order I/F device 10, allows the user to select one of the payment information, and transmits an identifier of the selected payment information to order processing device 20. Order processing device 20 receives the identifier of the selected payment information, and executes payment processing with the selected payment information.

Payment processing unit 24 uses the channel identifier included in the order form information to execute gain distribution processing for paying a predetermined sales performance reward to the medium operator, who corresponds to the channel identifier. The channel identifier including the marker or the code provided on the medium makes it possible to pay the performance reward to the medium operator.

### (1-2-5) Order Specification Transmission Unit 25

When the payment processing by payment processing unit 24 is normally completed, order specification transmission unit 25 generates order specification information, and transmits the generated order specification information to order specification reception device 30. The order specification information at least includes the address, the name, and the contact of the delivery destination of the item, which personal information acquisition unit 23 acquires, as well as the identification information of the item which item information acquisition unit 22 acquires. Order specification transmission unit 25 transmits the order specification information to order specification reception device 30 based on the contact information of the shipper of the item which the item information acquisition unit acquires.

### (1-3) Order Specification Reception Device 30

Via the computer network such as the Internet, order specification reception device 30 receives the order specification information transmitted from order processing device 20. Order specification reception device 30 comprises order specification output unit 31. The processor implements order specification output unit 31 by executing a program. The information which order specification output unit 31 uses for processing is read from the storage area. The information processed by order specification output unit 31 is stored into a storage area. The storage area is provided in a storage device. The storage device may be either a main storage device or an auxiliary storage device. Order specification reception device 30 receives information from the external device via the communication device. Order specification reception device 30 transmits information to the external device via the communication device. In the embodiment, order specification reception device 30 is installed at a depot of the shipper of the ordered item.

### (1-3-1) Order Specification Output Unit 31

Order specification output unit 31 allows an output device such as a printer to output the order specification information. Based on the outputted order specification information, a worker at the item shipper prepares to deliver the ordered item to the delivery destination.

### (1-4) Personal Information Storage 40

Personal information storage 40 is provided in a storage area of a storage device. It is enough for personal information storage 40 to be in a place where order processing device 20 can acquire information from personal information storage 40; personal information storage 40 may be either inside or outside order processing device 20. Information stored in personal information storage 40 is added or updated constantly by an external system. The external system is a system that provides a service site different from the online mail-order site which order processing device 20 provides. There is no contractual relationship other than the contract of personal information provision between the online mail-order site and the service site. As illustrated in Fig. 2, personal information storage 40 at least stores the personal identifier, the personal authentication information, the personal information, and the payment information while associating them with each personal identifier.

### (1-5) Item Information Storage 50

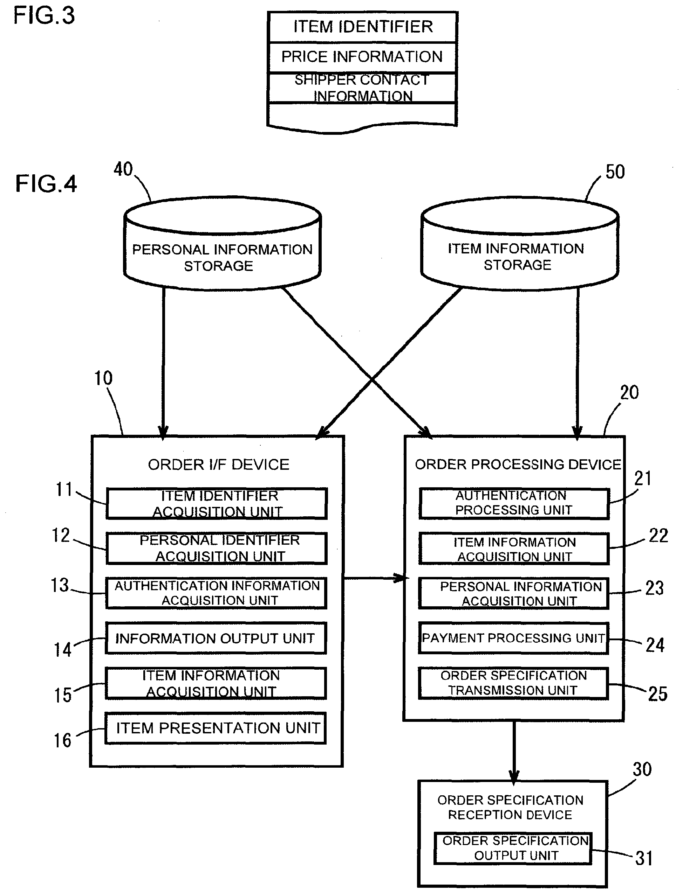

Item information storage 50 is provided in a storage area of a storage device. It is enough for item information storage 50 to be in a place where order processing device 20 can acquire information from item information storage 50; item information storage 50 may be either inside or outside order processing device 20. As illustrated in Fig. 3, item information storage 50 at least stores the item identifier, the price information of the item, and the contact information of the shipper of the item (address information for communication such as the IP address and the E-mail address set in order specification reception device 30) as the item information while associating them with each item identifier.

### (1-6) Operations

In the above configuration, the user of order I/F device 10 captures an image of the code or the mark, for ordering a specific item, provided on the medium and executes the predetermined operation of indicating ordering of the item. Thereafter, each of item identifier acquisition unit 11, personal identifier acquisition unit 12, and authentication information acquisition unit 13 executes processing, and then order I/F device 10 immediately transmits the order form information to order processing device 20. "Predetermined operation of indicating" may be an operation of allowing authentication information acquisition unit 13 to acquire the authentication information or may be an operation of allowing the user to input confirmation by an input device or a sensor. In order processing device 20, authentication processing unit 21 performs identification of the orderer based on the received order form information, item information acquisition unit 22 and personal information acquisition unit 23 acquire the personal information of the orderer and the item information of the ordered item, and payment processing unit 24 executes payment processing based on the personal information and the item information. Once payment processing unit 24 completes the predetermined payment processing, order specification transmission unit 25 transmits the order specification information to order specification reception device 30. In order specification reception device 30, order specification output unit 31 outputs the received order specification information to the output device. Based on the outputted order specification information, the worker at the item shipper prepares to deliver the ordered item.

Thus, according to the embodiment, just capturing an image of the code or the mark, for ordering a specific item, provided on the medium and executing the operation of indicating ordering of the item, the user of order I/F device 10 allows the item to be delivered to the delivery destination. Using the personal information that is added to personal information storage 40 or updated by the external system makes it possible to complete the order without inputting the personal information such as an address even when it is the first time to place an order with order processing device 30.

### (1-7) Modifications

### (1-7-1) Usage of Personal Information and the like Stored in Order I/F Device 10

Order I/F device 10 may put the personal information and/or the payment information, which is registered previously in the storage area of order I/F device 10 or the IC card (IC chip) such as the SIM card inserted in order I/F device 10, into the order form information, and may transmit the order form information to order processing device 20. In this case, order processing device 20 can use the personal information and/or the payment information acquired from order I/F device 10 instead of the personal information and the like acquired from personal information storage 40.

### (1-7-2) Identification Only by Order I/F Device 10

Order I/F device 10 may complete the identification processing based on the authentication information by internal processing, and when the identification is made, order I/F device 10 may transmit the order form information to order processing device 20. In this case, the identification processing performed by order processing device 20 can be omitted.

### (2)[Second Embodiment] Usage of IC chip

Next, a second embodiment of the invention is described based on Fig. 4. In this embodiment, the configuration of order I/F device 10 and each data structure of personal information storage 40 and item information storage 50 differ from those in the first embodiment. The structures of order processing device 20 and order specification reception device 30 are the same with those in the first embodiment.

### (2-1) Order I/F Device 10

In the embodiment, order I/F device 10 comprises item identifier acquisition unit 11, personal identifier acquisition unit 12, authentication information acquisition unit 13, information output unit 14, item information acquisition unit 15, and item presentation unit 16. Among them, configurations of authentication information acquisition unit 13 and information output unit 14 are the same with those in the first embodiment.

In the embodiment, a mobile terminal device, a vending machine, a digital signage, a car navigation system, and the like can be order I/F device 10, for example.

### (2-1-1) Item Identifier Acquisition Unit 11

In the embodiment, item identifier acquisition unit 11 acquires the item identifier of the item, which is selected by the user who operates the input device such as an input switch or a touch panel. The input device is a physical item selection button or a touch panel equipped in order I/F device 10. Item identifier acquisition unit 11 may acquire the item identifier of the item selected by the user by analyzing natural language inputted from a voice input device.

### (2-1-2) Personal Identifier Acquisition Unit 12

In the embodiment, personal identifier acquisition unit 12 acquires the personal identifier stored in the IC chip held over an IC chip reader by near field communication. The IC chip is stored in the IC card and the mobile terminal. The IC chip reader is equipped in order I/F device 10 or electrically connected to order I/F device 10.

### (2-1-3) Item Information Acquisition Unit 15

Item information acquisition unit 15 acquires location information of the place where order I/F device 10 is by a location information detector such as the GPS, and acquires one or more pieces of item information associated with order-available area information, which corresponds to the acquired location information, from item information storage 50. The location information detector such as the GPS is integrated in order I/F device 10 or electrically connected to order I/F device 10.

### (2-1-4) Item Presentation Unit 16

Item presentation unit 16 displays the one or more pieces of item information, which item information acquisition unit 15 acquires, on a display device of order I/F device 10 as an item available to order. The display device is equipped in order I/F device 10.

### (2-2-1) Personal Information Storage 40

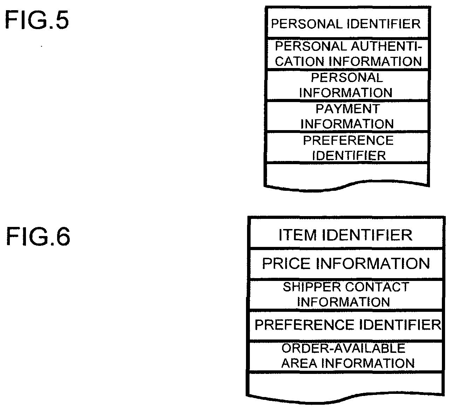

As illustrated in Fig. 5, personal information storage 40 at least stores the personal identifier, the personal authentication information, the personal information, and the payment information while associating them with each personal identifier. In the embodiment, personal information storage 40 further stores one or more preference identifiers, which indicate the preference of the orderer while associating them with each personal identifier.

### (2-2-2) Item Information Storage 50

As illustrated in Fig. 6, item information storage 50 at least stores the item identifier, the price information of the item, and the contact information of the shipper of the item (address information for communication such as the IP address and the E-mail address set in order specification reception device 30) as the item information while associating them with each item identifier. In the embodiment, item information storage 50 further stores one or more preference identifiers, which correspond to the item while associating them with each item identifier. In the embodiment, item information storage 50 further stores one or more pieces of order available area information, which indicates an area available to order the item, associated with each item identifier.

### (2-3) Operations

In the embodiment, once the user of order I/F device 10 executes the operation of asking to see the item available to order, item information acquisition unit 15 acquires the item information of the one or more items, which correspond to the place where order I/F device 10 is at that time, from item information storage unit 50. Based on the one or more pieces of item information which item information acquisition unit 15 acquires, item presentation unit 16 displays the information of the item available to order on the display device. The user checks the display on the display device and selects the item the user wants to order by operating the input device equipped in order I/F device 10. With this operation, item identifier acquisition unit 11 acquires the item identifier.

The user holds the IC card over the IC chip reader equipped in or connected to order I/F device 10. With this operation, personal identifier acquisition unit 12 acquires the personal identifier stored in IC chip. The authentication information acquisition processing by authentication information acquisition unit 13 and the order form information output processing by information output unit 14 are the same with those in the first embodiment.

The operation of order processing device 20 and the operation of order specification output device 30 after outputting the order form information are also the same with those in the first embodiment.

According to the embodiment, selecting the item available to order displayed on order I/F device 10 by operating the input device, and holding the IC chip in which the personal identifier is stored over the IC chip reader, the user makes it possible to deliver the ordered item to the delivery destination. Likewise, the first embodiment, the user of order I/F device 10 can place the order without inputting the personal information such as an address even when it is the first time to place an order with order processing device 30. In addition, according to the embodiment, an item appropriate for the location, which corresponds to the location where order I/F device 10 is, is displayed as the item available to order. Thus, at travel and the like, products depending on the location can be on sale, and consumers can buy those products.

### (2-4) Modifications

Modifications of the second embodiment are described below.

### (2-4-1) Usage of Personal Information and the like Registered in IC Chip

Order I/F device 10 may acquire the personal information and/or the payment information registered previously in the IC chip via the IC chip reader, may put the acquired personal information and/or the payment information into the order form information, and then may transmit the order form information to order processing device 20. In this case, order processing device 20 can use the personal information and/or the payment information acquired from order I/F device 10 instead of the personal information and the like acquired from personal information storage 40.

### (2-4-2) Item Presentation Based on Personal Preference Information

Order I/F device 10 may acquire personal preference information associated with the personal identifier, and may display the item corresponding to the preference information on the display device as the item available to order. In this case, in order I/F device 10, personal identifier acquisition unit 12 acquires the personal identifier from the IC chip, firstly. Item information acquisition unit 15 then acquires one or more preference identifiers associated with the acquired personal identifier from personal information storage 40. Item information acquisition unit 15 then acquires the item information associated with the acquired preference identifier from item information storage 50. Item presentation unit 16 displays the one or more pieces of item information, which item information acquisition unit 15 acquires, on the display device of order I/F device 10 as the item available to order. The following operations are the same with those described as the second embodiment. In this way, in addition to the effects of the second embodiment, the item information according to the preference of the user of order I/F device 10 can be presented to the user.

### (2-4-3) Information Acquisition Route

Order I/F device 10 may acquire information directly from personal information storage 40 or item information storage 50, or may acquire information of personal information storage 40 or item information storage 50 via order processing device 20. In the first embodiment and the second embodiment, order processing device 20 may acquire information directly from personal information storage 40 or item information storage 50, or may acquire information of personal information storage 40 or item information storage 50 via order I/F device 10.

### (2-4-4) Usage of Preference Information Registered previously in Order I/F Device 10

In the modification of the above (2-4-2), order I/F device 10 may register the preference identifier previously in the storage area of order I/F device 10, and may acquire the item information associated with this preference identifier registered previously from item information storage 50. In this case, the steps for acquiring the preference identifier, in which acquiring the personal identifier firstly and then acquiring the preference identifier associated with the personal identifier from personal information storage 40, can be omitted.

### (3) Common Thoughts in Embodiments

Conventionally, a user has been required to input the personal information such as an address in every independent shopping site. Even in the case of accessing a shopping site from the code or the marker such as a QR code (registered mark), still the personal information has been required to be inputted, whereby many steps have been required to complete the shopping. Hence, in the above embodiments, personal information storage 40 is independent from order processing device 20 corresponding to a shopping site. This allows the personal information registered in personal information storage 40 to be used openly over the site. The personal information such as an address registered in personal information storage 40 allows unique identification of the terminal number and the information in the SIM card as the identifier and read the specified identifier.

Here, distributed computing may implement the various operations of the system of the application according to the above embodiments.

### INDUSTRIAL APPLICABILITY

In the first embodiment, for example, it is possible to order a shirt someone is wearing by taking a picture of the code or the marker provided visibly or invisibly on that shirt. In addition, in the first embodiment, placing an order directly by using real information from a location or the item itself can be made, without looking for the item from a shopping site. Thus, shopping is easily achieved. Moreover, in the first embodiment, it is possible to place an order by taking a picture of the code or the marker provided on a book just at the time when the user is being elevated by reading the book. Thus, the probability of shopping increases. Furthermore, in the first embodiment, even a roadside station and a product promotion center in a bad location, or between mountains for example, can sell an item in a good location by providing the code or the marker on a poster and the like at a station and a busy street. Since the advertisement connects directly to the sales results, the effect of advertising can be seen obviously.

In addition, the current vending machine is used for selling stocks of the product therein; however, in the second embodiment, for example, it is possible to buy a local product of each location and deliver the product to home and the like by placing an order via a vending machine. With this, even when the vending machine has no stocks therein, it is possible to sell the goods of the shipper at a distance. One of the ways thereof is, for example, operating the input device to switch a screen of the vending machine from a beverage vending screen to a local product vending screen. This makes it possible to sell not only beverages but also various products such as the local products and clothing via the vending machine. Such a system that allows the product with no stocks in the vending machine to be sold from the vending machine via the computer network is the ever new system.

Further, in the second embodiment, by associating the location information of the car navigation system with the local product, it is possible to display the product corresponding to the location on the screen of the car navigation system and order the product. Likewise, by associating the location information of the mobile terminal with the local product, it is possible to display the product corresponding to the location on the screen of the mobile terminal and order the product.

### REFERENCE SIGNS LIST

- 10: order I/F device
- 11: item identifier acquisition unit
- 12: personal identifier acquisition unit
- 13: authentication information acquisition unit
- 14: information output unit
- 15: item information acquisition unit
- 16: item presentation unit
- 20: order processing device
- 21: authentication processing unit
- 22: item information acquisition unit
- 23: personal information acquisition unit
- 24: payment processing unit
- 25: order specification transmission unit
- 30: order specification reception device
- 31: order specification output unit
- 40: personal information storage
- 50: item information storage

## Claims

1. An ordering system utilizing personal information, comprising:
a personal information storage that stores personal information registered in one site while associating the personal information with a personal identifier, and provides the personal information to another site;
an order I/F device that transmits order form information of an item at least including the personal identifier and an item identifier;
an order processing device that serves as the other site, receives the order form information of the item, acquires the personal information registered in the one site and associated with the personal identifier included in the order form information, generates order specification information based on the acquired personal information and the order form information of the item, and transmits the order specification information; and
an order specification reception device that receives the order specification information and allows an output device to output the order specification information so as to prepare to deliver the item.

2. The ordering system utilizing personal information according to claim 1, wherein the order I/F device acquires the item identifier to be included in the order form information by taking a picture of a code or a mark provided visibly or invisibly on a medium.

3. The ordering system utilizing personal information according to claim 2, wherein
the order I/F device acquires, from the code or the mark, a channel identifier that allows unique identification of a medium operator of the medium provided with the code or the mark, and transmits the channel identifier to the order processing device, and
the order processing device executes processing of delivering a sales performance reward to the medium operator based on the channel identifier received from the order I/F device.

4. The ordering system utilizing personal information according to claim 1, comprising a personal authentication function that identifies a user of the order I/F device.

5. The ordering system utilizing personal information according to claim 1, wherein
the order I/F device presents items on a display device of the order I/F device, the item being available to order depending on location information of a place where the order I/F device is located, and puts the identifier of the item selected from the presented items into the order form information.

6. The ordering system utilizing personal information according to claim 1, wherein
the order I/F device presents items on a display device of the order I/F device, the item being available to order depending on a purchase history or preference of a user of the order I/F device or sales result of items, and puts the identifier of the item selected from the presented items into the order form information.

7. An ordering system utilizing personal information, comprising:
a means for receiving order form information of an item at least including a personal identifier and an item identifier from an order I/F device;
a means for acquiring, from a personal information storage that stores personal information registered in one site while associating the personal information with a personal identifier, and provides the personal information to another site, the personal information registered in the one site and associated with the personal identifier included in the order form information; and
a means for generating order specification information based on the acquired personal information and the order form information of the item, and transmitting the order specification information to an order specification reception device so as to prepare to deliver the item.

8. An ordering method utilizing personal information comprising:
receiving order form information of an item at least including a personal identifier and an item identifier from an order I/F device;
from a personal information storage that stores personal information registered in one site while associating the personal information with a personal identifier, and provides the personal information to another site, acquiring the personal information registered in the one site and associated with the personal identifier included in the order form information; and
generating order specification information based on the acquired personal information and the order form information of the item, and transmitting the order specification information to an order specification reception device so as to prepare to deliver the item.

9. An ordering program utilizing personal information that causes a processor to execute:
receiving order form information of an item at least including a personal identifier and an item identifier from an order I/F device;
from a personal information storage that stores personal information registered in one site while associating the personal information with a personal identifier, and provides the personal information to another site, acquiring the personal information registered in the one site and associated with the personal identifier included in the order form information; and
generating order specification information based on the acquired personal information and the order form information of the item, and transmitting the order specification information to an order specification reception device so as to prepare to deliver the item.
